# FASCICULE DE BREVET EUROPEEN

(11) **EP 3 134 693 B1**
(45) Date de publication et mention de la délivrance du brevet: **02.05.2018**
(21) Numéro de dépôt: 15709900.3
(22) Date de dépôt: 11.03.2015
(51) Int. Cl.: F26B 3/24, F26B 17/20

(54) **DISPOSITIF DE TRAITEMENT THERMIQUE A VIS COMPRENANT UNE BANDE ELECTRIQUEMENT ISOLANTE**
WÄRMEBEHANDLUNGSVORRICHTUNG MIT EINER SCHRAUBE MIT ELEKTRISCH ISOLIERENDEM STREIFEN
HEAT TREATMENT DEVICE COMPRISING A SCREW PROVIDED WITH AN ELECTRICALLY INSULATING STRIP

(30) Priorité: 24.04.2014 FR 1453715
(43) Date de publication de la demande: 01.03.2017
(73) Titulaire: E.T.I.A.-Evaluation Technologique, Ingenierie et Applications, 60201 Compiegne (FR)
(72) Inventeur: LEPEZ, Olivier, F-60260 Lamorlaye (FR); SAJET, Philippe, F-60610 Lacroix Saint-Ouen (FR)
(74) Mandataire: Decorchemont, Audrey Véronique Christèle
(86) Numéro de dépôt international: PCT/EP2015/055068
(87) Numéro de publication internationale: WO 2015/161956

(56) Documents cités:
- WO-A1-2014/044517
- FR-A1- 2 774 545
- FR-A1- 2 924 300

## Description

L'invention concerne un dispositif de traitement thermique d'un produit tel qu'un produit alimentaire divisé (épices, herbes, céréales, légumes déshydratés ...) qu'une biomasse, une matière polymérique ou tout autre solide divisé.

### ARRIERE PLAN TECHNOLOGIQUE DE L'INVENTION

Il est connu un dispositif de traitement thermique comportant une enceinte et des moyens de convoyage du produit entre l'entrée de l'enceinte et la sortie de l'enceinte qui comprennent une vis montée pour tourner dans l'enceinte selon un axe géométrique de rotation et des moyens d'entraînement en rotation de la vis comme divulgué dans le document FR2924300A1. Le dispositif comporte en outre des moyens de chauffage de la vis par effet Joule.

Le produit à traiter est usuellement introduit à l'entrée de l'enceinte sous forme de solides divisés. La vis pousse de façon continue les particules de produit vers la sortie de l'enceinte. Du fait de la température de la vis, le produit est chauffé au fur et à mesure de sa progression ce qui permet son traitement thermique (séchage, débactérisation, cuisson, torréfaction, pyrolyse, ...) .

Un tel dispositif permet un chauffage uniforme des produits traités.

Toutefois, du fait que les moyens de convoyage ne comportent aucun arbre autour duquel la vis s'enroule, la vis repose sur la paroi interne de l'enceinte. Or l'enceinte est généralement en métal et est donc électriquement conductrice. Pour éviter un court-circuit dans le dispositif lorsque les moyens de chauffage de la vis sont actifs, la paroi interne de l'enceinte est donc recouverte d'une couche en matériau électriquement isolant contre laquelle la vis vient directement s'appuyer.

Néanmoins la vis frotte la couche électriquement isolante lors de sa rotation dans l'enceinte ce qui a tendance à abîmer ladite couche. Or une telle couche s'avère difficile et coûteuse à remplacer.

### OBJET DE L'INVENTION

Un but de l'invention est de proposer un dispositif de traitement thermique qui permette d'obvier au problème précité.

### BREVE DESCRIPTION DE L'INVENTION

En vue de la réalisation de ce but, on propose un dispositif de traitement thermique d'un produit comportant :
- une enceinte,
- des moyens de convoyage du produit entre une entrée de l'enceinte et une sortie de l'enceinte qui comprennent une vis montée pour tourner dans l'enceinte selon un axe géométrique de rotation et qui comprennent des moyens d'entraînement en rotation de la vis selon ledit axe,
- des moyens de chauffage par effet Joule de la vis.

Selon l'invention, la vis comporte une bande qui est en matériau électriquement isolant et qui est rapportée sur la vis de sorte à former un pourtour externe de la vis.

Ainsi, la vis repose sur la paroi interne de l'enceinte par l'intermédiaire de la bande électriquement isolante de sorte que la vis et l'enceinte soient isolées électriquement l'une par rapport à l'autre. La paroi interne de l'enceinte n'a donc plus besoin de comporter de couche électriquement isolante de l'art antérieur.

Dans l'éventualité où la bande électriquement isolante de la vis venait à s'abîmer du fait des frottements de la bande contre la paroi interne de l'enceinte lors de la rotation de la vis, il s'avère en outre plus simple et moins coûteux de remplacer ladite bande par une bande neuve selon l'invention du fait de la mobilité de la vis.

### BREVE DESCRIPTION DES DESSINS

L'invention sera mieux comprise à la lumière de la description qui suit d'un mode de réalisation non limitatif de l'invention en référence aux figures ci-jointes, parmi lesquelles :
- la figure 1 est une vue en coupe schématique d'un dispositif de traitement selon l'invention ;
- la figure 2 est une vue en perspective partielle du dispositif de traitement illustré à la figure 1, l'enceinte dudit dispositif étant ouverte ;
- la figure 3 est une vue en coupe partielle de la vis du dispositif de traitement illustré à la figure 1, le plan de coupe comprenant l'axe géométrique de rotation de la vis ;
- la figure 4 est une vue agrandie d'une partie de la vis illustrée à la figure 3.

### DESCRIPTION DETAILLEE DE L'INVENTION

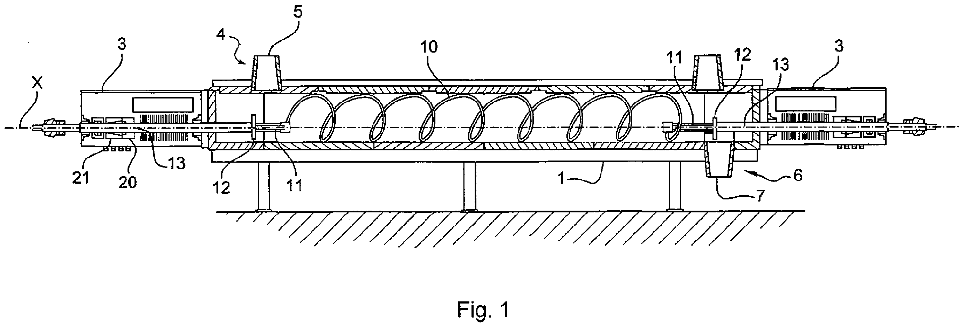

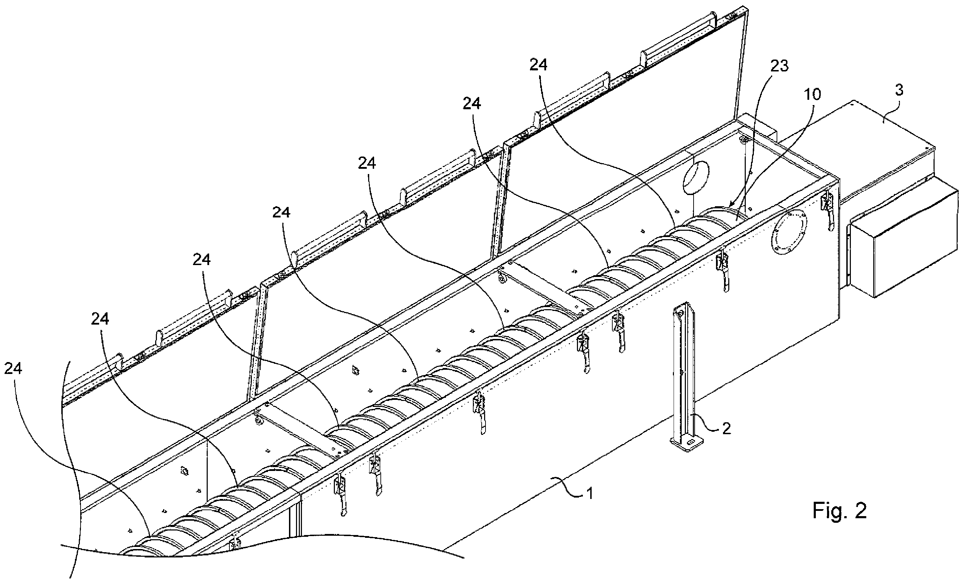

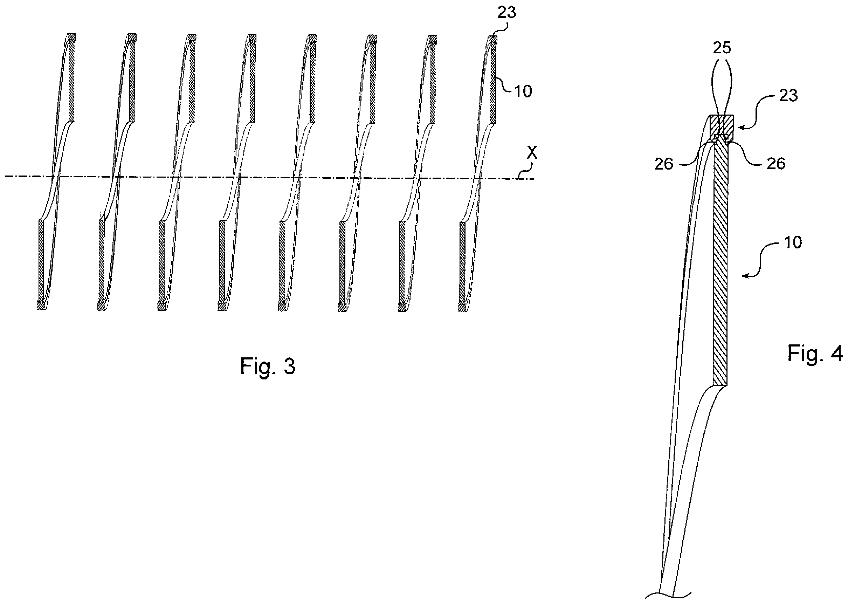

En référence aux figures 1 à 4, le dispositif selon l'invention permet de traiter thermiquement un produit. A cet effet, le dispositif comporte une enceinte 1, de direction générale essentiellement horizontale, qui est maintenue à distance du sol par des piètements 2. L'enceinte 1 est ici métallique, en particulier réalisée en acier inox amagnétique. Un caisson technique 3 est fixé à chacune des extrémités de l'enceinte 1.

L'enceinte 1 comporte ici une entrée 4 aménagée dans le couvercle de l'enceinte 1 sensiblement au niveau d'une première extrémité de l'enceinte 1. Selon un mode de réalisation particulier, le dispositif comporte une cheminée d'entrée 5 qui est connectée de façon étanche à l'entrée 4 de l'enceinte. La cheminée d'entrée 5 est par exemple connectée à un dispositif de broyage, de compactage ou de granulation du produit considéré en solides divisés ou encore à un dispositif de pré-conditionnement du produit considéré sous forme de solides divisés. Un dispositif de pré-conditionnement permet de chauffer et de sécher ledit produit à des valeurs prescrites de température et d'humidité relative ou encore de densifier le produit. Les solides divisés peuvent être sous forme de poudres, granulés, morceaux, fibres, ... en deux dimensions se présentant sous forme de feuillets ou encore des granulés en trois dimensions.

L'enceinte 1 comporte en outre une sortie 6 aménagée ici dans le fond de l'enceinte 1 sensiblement au niveau de la deuxième des deux extrémités de l'enceinte 1. Selon un mode de réalisation particulier, le dispositif comporte une cheminée de sortie 7 qui est connectée de façon étanche à la sortie 6 de l'enceinte 1. La cheminée de sortie 7 est par exemple connectée à un dispositif de refroidissement du produit.

Le dispositif comprend en outre des moyens de convoyage du produit entre une entrée de l'enceinte 1 et une sortie de l'enceinte 1. Lesdits moyens comportent ainsi une vis 10 qui s'étend ici dans l'enceinte 1 selon un axe géométrique X entre les deux caissons techniques 3 et qui est montée pour tourner autour dudit axe géométrique X dans l'enceinte 1. La vis 10 est par exemple en acier inoxydable. La vis 10 a ici une forme de serpentin hélicoïdal qui est fixé, par exemple par soudure, à ses deux extrémités en bout d'un tronçon d'arbre 11. Chacun desdits tronçon d'arbre 11 est relié à son autre extrémité, par le biais d'une bride 12, à un arbre coaxial 13 qui traverse le caisson technique d'extrémité associé.

Les moyens de convoyage comportent en outre des moyens d'entraînement en rotation de la vis 10 autour de l'axe géométrique X agencés par exemple dans l'un des caissons techniques 3. Selon un aspect particulier de l'invention, les moyens d'entraînement en rotation comportent un moteur électrique et des moyens de liaison mécanique entre l'arbre de sortie du moteur et une extrémité de l'arbre coaxial 13 associé, l'arbre coaxial 13 entraînant lui-même la vis 10. Les moyens d'entraînement en rotation comportent ici des moyens de contrôle de la vitesse de rotation de l'arbre de sortie du moteur qui comprennent par exemple un variateur de vitesses. Les moyens de contrôle permettent ainsi d'adapter la vitesse de rotation de la vis 10 au produit convoyé c'est-à-dire d'adapter le temps de séjour du produit dans l'enceinte 1.

Le dispositif comporte en outre des moyens de chauffage par effet Joule de la vis 10 qui sont ici agencés dans les caissons techniques 3. Selon un mode de réalisation particulier, les moyens de chauffage comportent des moyens de génération d'un courant électrique et des moyens de raccordement des deux extrémités de la vis aux deux polarités desdits moyens de génération. A cet effet, chaque arbre coaxial 13 est rigidement solidaire d'un tambour coaxial 20 en matériau électriquement conducteur, sur lequel frottent des charbons 21 d'amenée du courant électrique, reliés par des fils conducteurs (non représentés ici) aux moyens de génération d'un courant électrique. Selon un aspect particulier de l'invention, les moyens de chauffage comportent des moyens de régulation de l'intensité du courant électrique traversant la vis 10. Les moyens de régulation comportent ici un gradateur interposé entre les moyens de génération du courant électrique et les moyens de raccordement. Les moyens de régulation permettent ainsi d'adapter l'intensité électrique traversant la vis 10 au produit convoyé.

En service, le produit à traiter est introduit dans la cheminée d'entrée 5 sous forme de solides divisés bruts ou de solides divisés pré-conditionnés et la vis 10 pousse de façon continue les solides divisés vers la sortie 6 de l'enceinte 1. Du fait de la température de la vis 10, les solides divisés sont traités thermiquement selon les conditions opératoires choisies en temps et en température. La vis 10 assure ainsi à la fois un traitement thermique du produit et le convoyage du produit.

Pour plus de détails, on pourra se référer au document FR 2 924 300 de la demanderesse, dans lequel l'enceinte 1, les moyens de convoyage et les moyens de chauffage sont décrits en détail.

Selon l'invention, la vis 10 comporte en outre une bande 23 qui est en matériau électriquement isolant et qui est rapportée sur la vis 10 de sorte à former un pourtour externe de la vis 10. La bande 23 est ainsi rapportée sur la vis de sorte à s'étendre hélicoïdalement autour de l'axe X. La bande 23 forme donc une extension radiale de la vis et plus précisément ici du serpentin hélicoïdal.

La bande 23 est ici agencée pour s'étendre sur toute la longueur de la vis c'est-à-dire que la bande s'étend le long du serpentin hélicoïdal sur tout l'axe X. La périphérie de la vis 10 est donc toujours recouverte par la bande 23.

De façon particulière, la bande 23 recouvre partiellement la vis 10 selon la direction radiale.

Typiquement, la bande 23 a une épaisseur comprise entre 4 et 20 millimètres (l'épaisseur étant définie selon la direction radiale).

De façon particulière la bande 23 est en polytétrafluoroéthylène (plus connu sous le nom de Téflon, marque déposée) ou bien encore en polyétheréthercétone plus connu sous le nom de PEEK.

Selon un mode de réalisation particulier, la bande 23 comporte plusieurs tronçons 24. De préférence, chaque tronçon 24 est conformé pour pouvoir être encliqueté sur la périphérie de la vis 10. La vis 10 comporte par exemple sur ses faces principales des rainures 25 (dont deux seulement sont numérotées ici) dans lesquelles des pattes d'encliquetages 26 correspondantes (dont deux seulement sont numérotées ici) des tronçons 24 viennent s'emboîter élastiquement.

Ainsi, pour isoler électriquement la vis 10 de l'enceinte 1, il suffit d'emboîter séparément chaque tronçon 24 sur la vis de sorte à définir la bande 23. Lors de l'assemblage des tronçons 24, on accole ici les différents tronçons 24 les uns aux autres pour éviter un espacement entre les différents tronçons 24.

Il s'avère ainsi très simple de rapporter la bande 23 sur la vis 10 et donc également de changer de bande 23 lorsque celle-ci est usée. On peut en outre seulement changer un tronçon 24 abîmé ce qui évite d'avoir à remplacer l'intégralité de la bande 23.

Bien entendu l'invention n'est pas limitée au mode de réalisation décrit et on peut y apporter des variantes de réalisation sans sortir du cadre de l'invention tel que défini par les revendications.

En particulier, bien qu'ici la vis ait une résistance électrique identique le long de son axe géométrique de rotation, la vis pourra avoir une résistance électrique qui varie le long dudit axe. La vis pourra ainsi avoir des caractéristiques géométriques (pas, diamètre, hauteur, nombre de spires ...) variant le long dudit axe. Pour plus de détails, on pourra se référer au document FR 2 995 986 de la demanderesse. Bien entendu, on adaptera en conséquence la forme de la bande pour qu'elle puisse être rapportée sur une telle vis quand bien même la vis présente une géométrie différente le long de son axe géométrique de rotation.

La bande pourra être différente de ce qui a été décrite. Au lieu d'être encliquetée sur la vis, la bande pourra être fixée à la vis sans être emboîtée sur la vis par exemple par de l'adhésif ou encore des vis. Si la bande est constituée de plusieurs tronçons, les tronçons pourront être solidarisés entre eux au lieu d'être juste accolés les uns aux autres comme cela a été décrit. Les tronçons pourront ainsi être assemblés entre eux par exemple par adhésif ou par soudage. La bande pourra ne pas recouvrir la vis sur toute sa longueur à condition que la périphérie de la vis non recouverte par la bande ne soit pas en contact direct avec la paroi interne de l'enceinte. En tout état de cause, la bande pourra avoir toute forme adaptée à l'isolation électrique de la paroi interne de l'enceinte vis-à-vis de la vis.

Bien qu'ici la bande soit en Téflon, la bande pourra être en tout autre matériau électriquement isolant à condition que ledit matériau présente des caractéristiques mécaniques lui permettant d'être suffisant souple pour que la bande puisse suivre la périphérie de la vis sur toute la longueur de la vis.

## Revendications

1. Dispositif de traitement thermique d'un produit comportant :
- une enceinte (1),
- des moyens de convoyage du produit entre une entrée (4) de l'enceinte et une sortie (6) de l'enceinte qui comprennent une vis (10) montée pour tourner dans l'enceinte selon un axe géométrique de rotation (X) et qui comprennent des moyens d'entraînement en rotation de la vis selon ledit axe,
- des moyens de chauffage par effet Joule de la vis,
le dispositif étant **caractérisé en ce que** la vis comporte une bande (23) qui est en matériau électriquement isolant et qui est rapportée sur la vis de sorte à former un pourtour externe de la vis.

2. Dispositif selon la revendication 1, dans lequel la bande (23) est agencée pour former l'intégralité du pourtour externe de la vis (10).

3. Dispositif selon la revendication 1, dans lequel la bande (23) est en polytétrafluoroéthylène.

4. Dispositif selon la revendication 1, dans lequel la bande (23) est en polyétheréthercétone.

5. Dispositif selon la revendication 1, dans lequel la bande (23) a une épaisseur comprise entre 4 et 20 millimètres.

6. Dispositif selon la revendication 1, dans lequel la bande (23) est encliquetée sur la vis (10).

## Patentansprüche

1. Vorrichtung zur Wärmebehandlung eines Produkts, umfassend:
- einen geschlossenen Raum (1);
- Fördermittel zum Fördern des Produkts zwischen einem Einlass (4) des geschlossenen Raums und einem Auslass (6) des geschlossenen Raums, die eine Schnecke (10) umfassen, die in dem geschlossenen Raum drehbar um eine geometrische Rotationsachse (X) gelagert ist, und die Drehantriebsmittel zum Drehantrieb der Schnecke entlang der Achse umfassen,
- Heizmittel zum Erwärmen der Schnecke mittels Joule-Effekt,
wobei die Vorrichtung **dadurch gekennzeichnet ist, dass** die Schnecke einen Streifen (23) umfasst, der aus einem elektrisch isolierenden Material und derart auf die Schnecke aufgebracht ist, dass er einen äußeren Umfang der Schnecke bildet.

2. Vorrichtung nach Anspruch 1, bei der der Streifen (23) so ausgebildet ist, dass er den gesamten äußeren Umfang der Schnecke (10) bildet.

3. Vorrichtung nach Anspruch 1, wobei der Streifen (23) aus Polytetrafluorethylen ist.

4. Vorrichtung nach Anspruch 1, wobei der Streifen (23) aus Polyetheretherketon ist.

5. Vorrichtung nach Anspruch 1, wobei der Streifen (23) eine Dicke hat, die im Bereich zwischen 4 und 20 Millimeter liegt.

6. Vorrichtung nach Anspruch 1, wobei der Streifen (23) auf die Schnecke (10) aufgerastet ist.

## Claims

1. Device for applying heat treatment to a substance, the device comprising:
• an enclosure (1);
• conveyor means for conveying the substance between an inlet (4) of the enclosure and an outlet (6) of the enclosure, which conveyor means comprise a screw (10) mounted to rotate inside the enclosure about an axis of rotation (X) and include drive means for driving the screw in rotation about said axis; and
• means for heating the screw by the Joule effect;
the device being **characterized in that** the screw includes a strip (23) made of electrically insulating material that is fitted on the screw so as to form an outer periphery of the screw.

2. Device according to claim 1, wherein the strip (23) is arranged to form the entire outer periphery of the screw (10) .

3. Device according to claim 1, wherein the strip (23) is made of polytetrafluoroethylene.

4. Device according to claim 1, wherein the strip (23) is made of polyetheretherketone.

5. Device according to claim 1, wherein the strip (23) is of thickness lying in the range 4 mm to 20 mm.

6. Device according to claim 1, wherein the strip (23) is snap-fastened on the screw (10).
